# EUROPEAN PATENT APPLICATION

(11) **EP 4 745 643 A1**
(43) Date of publication of application: **20.05.2026**
(21) Application number: 25215375.4
(22) Date of filing: 12.11.2025
(51) Int. Cl.: G02B 6/44

(54) **RACK MOUNTABLE HOUSING FOR EQUIPMENT RACKS OF A FIBER OPTIC NETWORK AND CORRESPONDING METHODS THEREOF**

(30) Priority: 13.11.2024 US 202463719696 P; 19.12.2024 EP 24221596
(71) Applicant: CORNING RESEARCH & DEVELOPMENT CORPORATION, Corning NY 14831 (US)
(72) Inventor: Ruda, Michal, 95-060 Brzeziny (PL)
(74) Representative: Reddie & Grose LLP

(57) **Abstract**

The present disclosure relates to a rack mountable housing that is a unitary piece configured to attach to a rack and to receive cassettes in guide channels of the rack mountable housing. The rack mountable housing also includes a rear panel with a cable entry area. The cable entry area includes a rear cable entry and a side cable entry. The rear cable entry having a longitudinal axis that is substantially parallel to a central axis of the rack mountable housing, and the side cable entry having a longitudinal axis that is angled relative to the central axis of the housing. The rear cable entry and the side cable entry including a cable guide pathway and a cable guide element, respectively, where both the cable guide pathway and the cable guide element have a tapered profile.

## Description

### Priority Application

This application claims the benefit of priority of U.S. Provisional Application No. 63/719,696, filed on November 13, 2024, the content of which is relied upon and incorporated herein by reference in its entirety.

### Technical Field

This disclosure relates generally to rack mountable housing through which fiber optic cables are routed, and more particularly, to a rack mountable housing for use in an equipment rack of a fiber optic network.

### Background

The large amount of data and other information transmitted over the internet has led businesses and other organizations to develop large scale fiber optic networks for organizing, processing, storing and/or disseminating large amounts of data. Network design and cabling-infrastructure architecture are becoming increasingly large and complex to handle growing industry needs.

There are many different network architectures, and the various tasks required to distribute optical signals (e.g., splitting, splicing, routing, connecting subscribers) can occur at several locations. Regardless of whether a location is considered a central office, local convergence point, network access point, subscriber premise, or something else, fiber optic equipment is used to house components that carry out one or more of the tasks. The fiber optic equipment, which may include fiber distribution hubs (FDH), cabinets, closures, network interface devices, distribution frames, etc. Many types of fiber optic equipment include equipment racks or frames to which components are mounted. Organizing fiber optic cables within this equipment can be a challenge.

Although most current cabling infrastructure architecture is satisfactory for present industry needs, the increasing density of equipment trays and feeder cables within racks requires a more adaptable and dependable cable management system, particularly for trays that are selectively removable from the equipment rack. The ever-increasing optical fibers and connector density within racks requires more technician time for installation and maintenance. This drives the costs of installation and maintenance of fiber optic networks.

Therefore, a need exists for equipment racks and assemblies that are more flexible, efficient, and capable of maintaining or easing installation and maintenance of the growing density of optical fibers and connectors.

### Summary

The invention is defined in the independent claim. Optional features are set out in the dependent claims.

The present disclosure relates to a rack mountable housing that is a unitary piece configured to attach to a rack and to receive cassettes in guide channels of the rack mountable housing. The rack mountable housing also includes a rear panel with a cable entry area. The cable entry area includes a rear cable entry and a side cable entry. The rear cable entry having a longitudinal axis that is substantially parallel to a central axis of the rack mountable housing, and the side cable entry having a longitudinal axis that is angled relative to the central axis of the housing. The rear cable entry and the side cable entry including a cable guide pathway and a cable guide element, respectively, where both the cable guide pathway and the cable guide element have a tapered profile.

In one embodiment, a fiber optic system for installation on an equipment rack in a fiber optic network is provided. The fiber optic system comprising: a housing for having a central axis and comprising: a bottom panel, a first side panel, a second side panel, and a rear panel to define a module compartment within the housing; the rear panel comprising a cable entry area, the cable entry area comprising: a side cable entry that has a longitudinal axis at an angle relative to the central axis of the housing; and an optical module received within the module compartment.

Optionally, the angle of the longitudinal axis of the side cable entry relative to the central axis is about 90°. Optionally, the side cable entry comprises a cable guide element having a taper, whereby a first width of the cable guide element that is distal to the central axis is greater than a second width of the cable guide element that is proximal to the central axis. Optionally, an entry of the side cable entry is positioned between one of the first side panel or the second side panel and the central axis. Optionally, the cable entry area further comprises a rear cable entry comprising a cable guide pathway having a longitudinal axis that is substantially parallel to the central axis; and wherein the cable guide pathway has a taper, whereby a first width of the cable guide pathway that is distal to the module compartment is greater than a second width of the cable guide pathway that is proximal to the module compartment. Optionally, the module compartment comprises a first module compartment section and a second module compartment section that are separated by a divider wall in the housing; wherein the optical module is housed in one of the first module compartment section or the second module compartment section by engaging with the divider wall and one of the first side panel and the second side panel. Optionally, the optical module comprises a body, a front end. a rear end, and first and second side panels and a rear panel defining an interior, wherein the optical module further includes a plurality of adapters positioned on the front end of the optical module.

A fiber optic system for installation on an equipment rack in a fiber optic network is also provided, wherein the equipment rack having a front side and a back side with a first vertical frame member opposing a second vertical frame member between the front side and the back side is provided. The fiber optic system comprises: a housing comprising: a bottom panel, a first side panel, a second side panel, and a rear panel to define a module compartment within the housing, wherein the module compartment comprises a first module compartment section and a second module compartment section that are separated by a divider wall in the housing; wherein the first side panel and the second side panel each comprise a latching arrangement extending from an end of the first side panel and the second side panel, the latching arrangement is configured to couple the housing to the equipment rack of a fiber optic network, the latching arrangement comprising a first latch and a second latch, wherein the first latch and the second latch are configured to engage in a snap fit configuration when installed onto the equipment rack; the rear panel comprising a cable entry area, the cable entry area comprising: a side cable entry that has a longitudinal axis at an angle relative to a central axis of the housing; and an optical module housed in one of the first module compartment section or the second module compartment section by engaging with the divider wall and one of the first side panel and the second side panel.

Optionally, the angle of the longitudinal axis of the side cable entry relative to the central axis is about 90°. Optionally, the side cable entry comprises a cable guide element having a taper, whereby a first width of the cable guide element that is distal to the central axis is greater than a second width of the cable guide element that is proximal to the central axis. Optionally, an entry of the side cable entry is positioned between one of the first side panel or the second side panel and the central axis. Optionally, the cable entry area further comprises a rear cable entry comprising a cable guide pathway having a longitudinal axis that is substantially parallel to the central axis; and wherein the cable guide pathway has a taper, whereby a first width of the cable guide pathway that is distal to the module compartment is greater than a second width of the cable guide pathway that is proximal to the module compartment. Optionally, the optical module comprises a body, a front end. a rear end, and first and second side panels and a rear panel defining an interior, wherein the optical module further includes a plurality of adapters positioned on the front end of the optical module.

A method of installing a fiber optic system in an equipment rack of a fiber optic network, the fiber optic system comprising a housing having a bottom panel, a first side panel, a second side panel, and a rear panel to define a module compartment within the housing, the first side panel having a first latching arrangement comprising a first latch and a second latch and a second latching arrangement comprising a third latch and a fourth latch is provided. The method comprising: installing the optical module within the module compartment of the housing, wherein the optical module comprises a body, a front end. a rear end, and first and second side panels and a rear panel defining an interior, wherein the optical module further includes a plurality of adapters positioned on the front end of the optical module; coupling the first latch and the second latch of the first latching arrangement onto a first vertical frame member of the equipment rack; coupling the third latch and the fourth latch of the second latching arrangement onto a second vertical frame member of the equipment rack; wherein the first latching arrangement and the second latching arrangement are coupled to the first vertical frame member and the second vertical frame member, respectively, in a snap fit engagement.

Optionally, the first latching arrangement further includes a first screw hole and the second latching arrangement further includes a second screw hole. Optionally, the method further comprising: coupling the first screw hole to the first vertical frame member of the equipment rack by installing a screw therethrough; and coupling the second screw hole to the second vertical frame member of the equipment rack by inserting a second screw therethrough. Optionally, the first screw hole is vertically between the first latch and the second latch of the first latching member; and wherein the second screw hole is vertically between the third latch and the fourth latch of the second latching member. Optionally, the rear panel of the housing comprises a cable entry area, the cable entry area comprising: a side cable entry that has a longitudinal axis at an angle relative to a central axis of the housing; wherein the angle of the longitudinal axis of the side cable entry relative to the central axis is about 90°. Optionally, the side cable entry comprising a cable guide element having a taper, whereby a first width of the cable guide element that is distal to the central axis is greater than a second width of the cable guide element that is proximal to the central axis. Optionally, an entry of the side cable entry is positioned between one of the first side panel or the second side panel and the central axis.

Additional features and advantages will be set forth in the detailed description which follows, and in part will be readily apparent to those skilled in the technical field of optical connectivity. It is to be understood that the foregoing general description, the following detailed description, and the accompanying drawings are merely exemplary and intended to provide an overview or framework to understand the nature and character of the claims.

### Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
FIG. 1 is a schematic view illustrating an exemplary carrier network including a passive optical network in which embodiments of the disclosure may be used.
FIG. 2 is a perspective view of a rack mountable housing in an exemplary equipment rack in the fiber optic network shown in Fig. 1, illustrating a rack mountable assembly in an installed, closed position in the equipment rack.
FIG. 3 is a front perspective view of the rack mountable housing in FIG. 2.
FIG. 4 is a rear perspective view of the rack mountable housing in FIG. 2.
FIG. 5 is a front view of a side cable entry of the rack mountable housing of FIGS. 3-4.
FIG. 5A is a cross sectional view of the side cable entry of the rack mountable housing shown in FIG. 5.
FIG. 6 is a front view of a rear cable entry of the rack mountable housing of FIGS. 3-4.
FIG. 6A is a cross sectional view of the rear cable entry of the rack mountable housing as shown in FIG. 6.
FIGS. 7-9 illustrate a method of installing the rack mountable housing onto the equipment rack resulting in the configuration shown in FIG. 2.

### Detailed Description

The following description of the embodiments of the present invention is merely exemplary in nature and is in no way intended to limit the invention, its application, or uses. The following description is provided herein solely by way of example for purposes of providing an enabling disclosure of the invention, but does not limit the scope or substance of the invention.

The present disclosure relates to a rack mountable housing that is a unitary piece configured to attach to a rack and to receive cassettes in guide channels of the rack mountable housing. The rack mountable housing also includes a rear panel with a cable entry area. The cable entry area includes a rear cable entry and a side cable entry. The rear cable entry having a longitudinal axis that is substantially parallel to a central axis of the rack mountable housing, and the side cable entry having a longitudinal axis that is angled relative to the central axis of the housing. The rear cable entry and the side cable entry including a cable guide pathway and a cable guide element, respectively, where both the cable guide pathway and the cable guide element have a tapered profile.

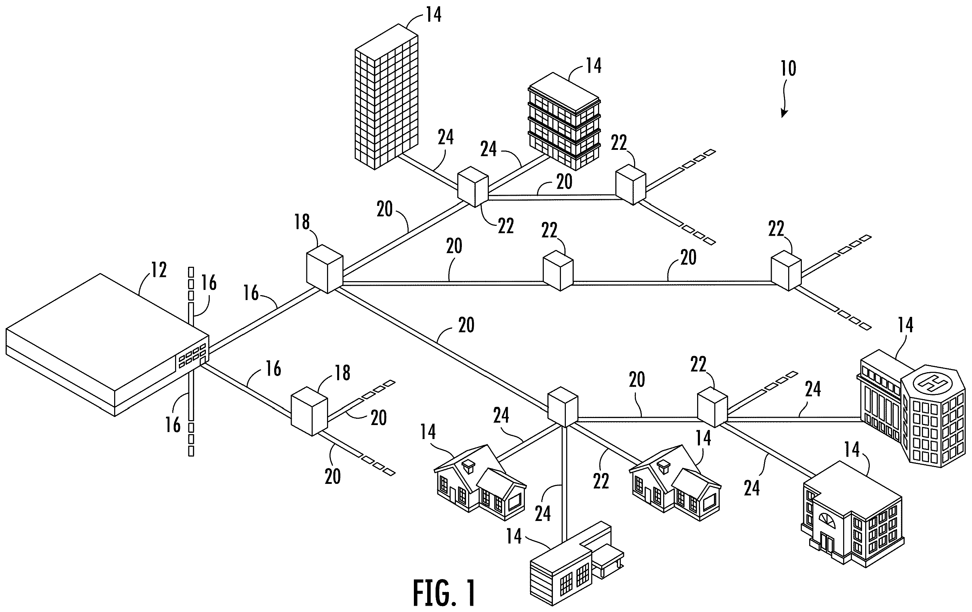

Embodiments of the disclosure pertain to a rack mountable housing for use in fiber optic routing and connectivity in equipment racks and to a method for installing the rack mountable housing in the equipment rack for use in a FTTx carrier network, such as that shown by way of example in FIG. 1 and described below.

As illustrated in FIG. 1, an exemplary FTTx carrier fiber optic network 10 distributes optical signals generated at a switching point 12 (e.g., a central office) to one or more subscriber premises 14. Optical line terminals (OLTs - not shown) at the switching point 12 convert electrical signals into optical signals. Fiber optic feeder cables 16 then carry the optical signals to various local convergence points 18. The convergence points 18 act as locations for making cross-connections and interconnections (e.g., by splicing or patching cables). The local convergence points 18 often include splitters or WDM components to enable any given optical fiber in the feeder cable 16 to serve multiple subscriber premises 14. As a result, the optical signals are "branched out" from the optical fibers of the feeder cables 16 to optical fibers of fiber optic distribution cables 20 that exit the local convergence points 18.

At remote network access points 22 closer to the subscriber premises 14, some or all the optical fibers in the distribution cables 20 may be accessed to connect to one or more subscriber premises 14. Drop cables 24 extend from the network access points 22 to the subscriber premises 14, which may be single-dwelling units (SDU), multi-dwelling units (MDU), businesses, and/or other facilities or buildings. An optical network terminal (ONT - not shown) located at or inside the subscriber premises 14 receives one or more optical signals and converts the optical signals back to electrical signals at the remote distribution points or subscriber premises 14. Equipment racks may be located in any single one or each of the switching points 12, local convergence points 18, and remote network access points 22 in the carrier network 10. These locations are exemplary, as equipment racks may be located in other locations, such as in data centers.

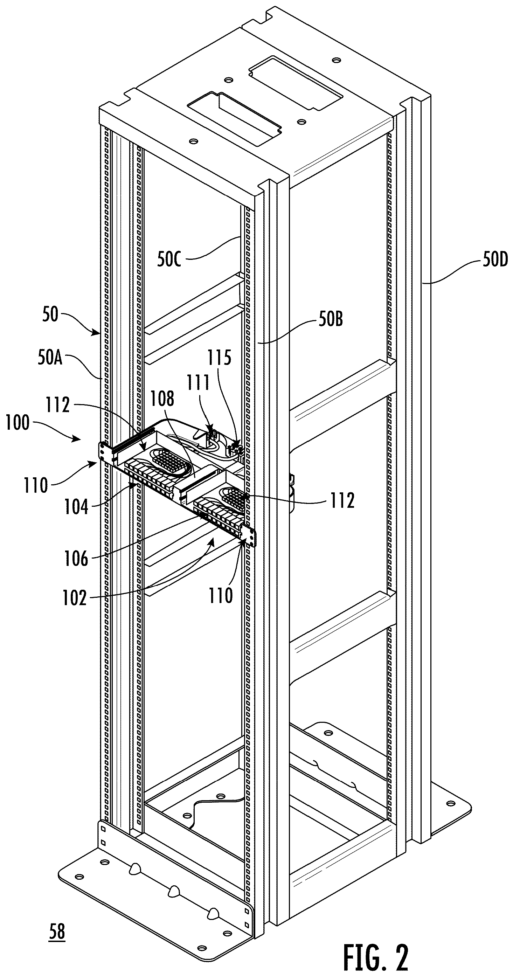

An equipment rack 50 is shown in FIG. 2. Equipment rack 50 may receive one or more feeder cables 44, which may be any one of the feeder cables 16, distribution cables 20, or drop cables 24 in FIG. 1. The equipment rack 50 is configured to house network equipment and to support one or more rack mountable housings 100 to which the feeder cables 44 may be routed. As shown in FIG. 2, the equipment rack 50 may include a pair of front vertical frame members 50A, 50B and a pair of rear vertical frame members 50C, 50D where the area between the front vertical frame members 50A, 50B and the rear vertical frame members 50C, 50D define an interior space within equipment rack 50 for each rack mountable housing 100. In some embodiments and as shown in FIG. 2, rack mountable housing 100 is coupled to front vertical frame members 50A, 50B as discussed in greater detail herein. However, it is within the scope of the present disclosure that in alternate embodiments, rack mountable housing 100 is coupled to front vertical frame members 50A, 50B. While embodiments of the rack mountable housing 100 are not generally limited in dimension, the rack mountable housing 100 is scalable to meet 19", 21", and 23" or other rack standards.

Rack mountable housing 100 is generally installed to the front vertical frame members 50A, 50B or the rear vertical frame members 50C, 50D such that a technician or other personnel can access and maintain the rack mountable housing 100 while standing on the floor 58. Although only a single rack mountable housing 100 is shown in FIG. 2, additional rack mountable housings 100 may be mounted to the vertical frame members 50A-50D to populate the entirety of a height of the equipment rack 50 along the vertical frame members 50A-50D. Fibers from the feed cable 44 may then be routed to and terminated within each rack mountable housing 100.

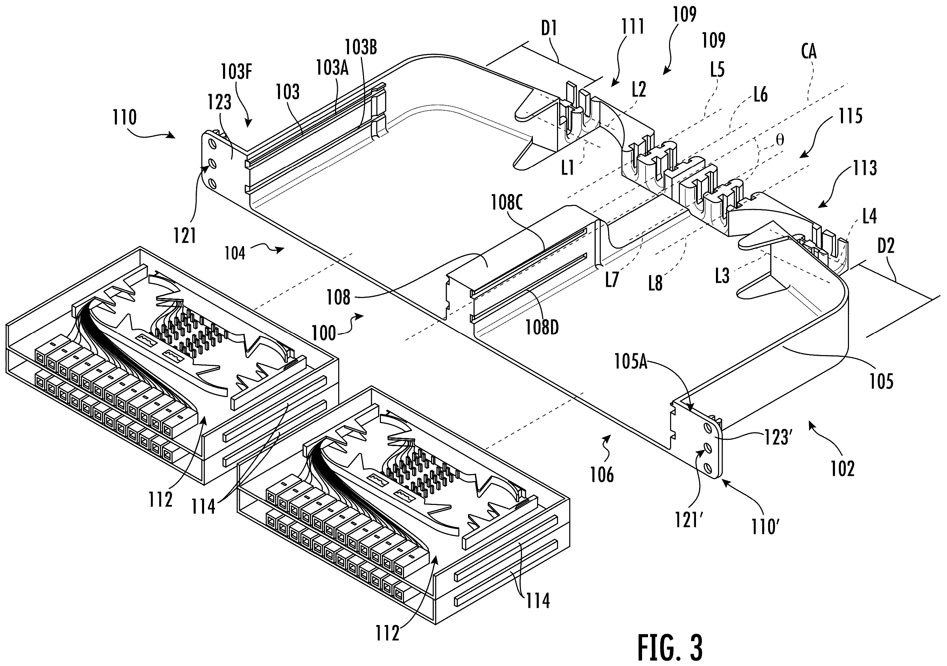

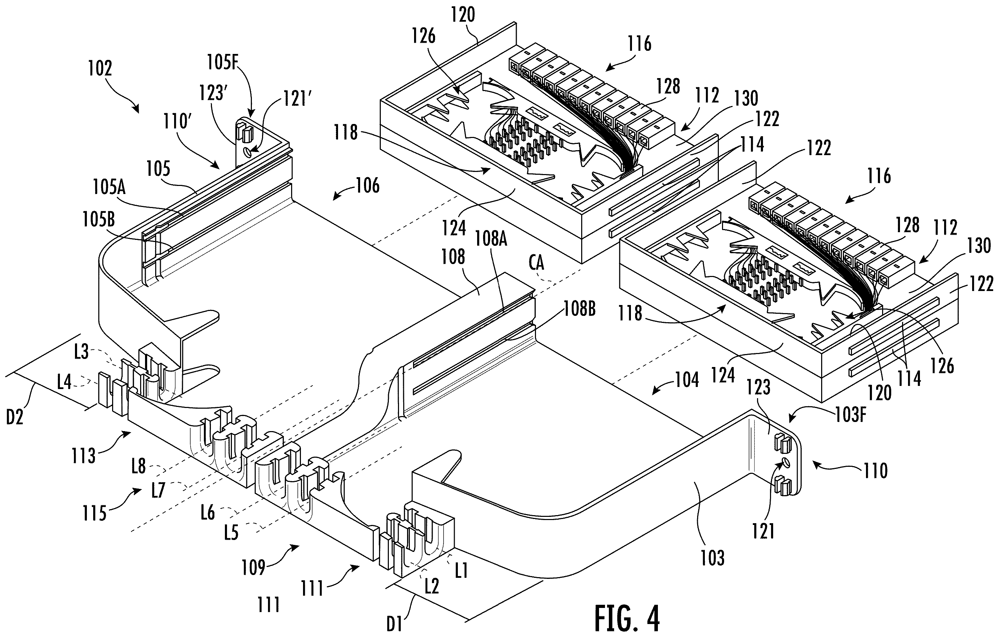

Referring now to FIGS. 3 and 4, a rack mountable housing 100 is shown. Rack mountable housing 100 is a unitary piece that is configured to both attach to equipment rack 50 and to receive optical modules 112. Optical modules 112 are modular, rectangular housing units used to organize and manage fiber optic cables and connections in a network system, like a data center. Modules 112 simplify the management of high-density fiber optic cabling by acting as a plug-and-play component that houses pre-terminated cables and can be easily inserted into a housing or enclosure. As shown, optical modules 112 each have a body 130 and each include a front end 116 and a rear end 118 with side panels 120, 122 and rear panel 124 defining an interior 126. Optical modules 112 further include a plurality of adapters 128 position on the front end 116 and various optical components (e.g., splice trays, etc.) in the interior 126.

Rack mountable housing 100 comprises a bottom panel 101, side panels 103, 105, and a rear panel 107 to define a module compartment 102. Rack mountable housing 100 also includes a central axis CA as shown. Bottom panel 101 provides a mounting surface for inserting optical modules 112 into the module compartment 102. Bottom panel 101 further comprises a divider wall 108 that divides module compartment 102 into individual module compartment sections 104, 106. Divider wall 108 includes guide channels 108A-108D as shown in FIGS. 3-4 that face guide channels of either side panel 103, 105. Guide channels 108A-108D are configured to engage with optical modules 112 in conjunction with guide channels of side panels 103, 105 to receive and hold optical modules 112 within the respective module sections 104, 106 as discussed herein. Module compartment 102 and individual module compartment sections 104, 106 are configured to receive optical modules 112 within rack mountable housing 100 as discussed below.

Side panels 103, 105 and rear panel 107 provide lateral physical boundaries for the optical modules 112 that are housed within rack mountable housing 100. Side panels 103, 105 each have a pair of guide channels 103A, 103B; 105A,105B, respectively, to engage with edges 114 on side panels 120, 122 of optical modules 112 when the optical modules 112 are inserted. That is, for example, when an optical module 112 is inserted into module compartment section 104, edges 114 of optical modules 112 engage with guide channels 108A, 108B of divider wall 108 and guide channels 103', 103" of side panel 103 to receive and hold the optical module 112 within the module compartment section 104 is translated towards rear panel 107 of rack mountable housing 100. Similarly, when an optical module 112 is inserted into module compartment section 106, edges 114 of optical modules 112 engage with guide channels 108C, 108D of divider wall 108 and guide channels 105A, 105B of side panel 105 to receive and hold the optical module 112 within the module compartment section 104 as optical module 112 is translated towards rear panel 107 of rack mountable housing 100. Similarly, to remove optical module 112 from either module compartment section 104, 106, optical module 112 is translated along the guide channels of either side panels 103, 105 and divider wall 108 away from rear panel 107 of rack mountable housing 100.

Side panels 103, 105 each also comprise a latching arrangement 110, 110', respectively, at a front end 103F, 105F of the respective side panel 103, 105 (distal to the rear panel 107). Latching arrangement 110, 110' extends from the side panels 103, 105 away from central axis CA as shown in FIGS. 3 and 4. For the sake of brevity and ease in description, latching arrangement 110 is discussed below. However, it is within the scope of the present disclosure that the description below relating to latching arrangement 110 also applies to latching arrangement 110' and similar reference numbers refer to similar parts.

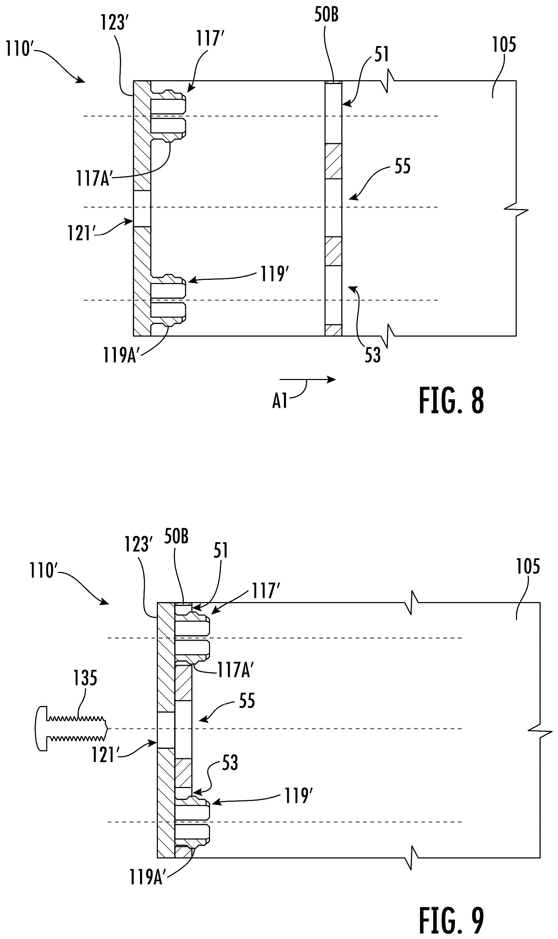

Latching arrangements 110 comprise a latching surface 123, a first latch 117, a second latch 119, and a screw hole 121. First and second latches 117, 119 are spaced from each other on latching surface 123 by a distance that corresponds to the distance between apertures 51, 53 (FIG. 8) on front vertical frame members 50A, 50B such that first and second latches 117, 119 engage with front vertical frame members 50A, 50B to couple rack mountable housing 100 to equipment rack 50. First and second latches 117, 119 each comprise a protrusion 117A, 119A that is configured to engage with front vertical frame members 50A, 50B in a snap fit configuration when coupling rack mountable housing 100 to equipment rack 50. Screw hole 121 is provided on latching surface 123 and is configured to align with a screw hole 55 (FIG. 8) on front vertical frame member 50A such that an attachment element 139 (e.g., screw, etc., FIG. 9) can be inserted through the screw holes 121, 55 to further secure rack mountable housing 100 onto equipment rack 50.

The rear panel 107 of rack mountable housing 100 comprises a cable entry area 109 which is configured to receive optical cables such as feeder cables 44, for example. As shown in FIGS. 3 and 4, the cable entry area 109 comprises side cable entries 111, 113 and a rear cable entry 115. Side cable entries 111, 113 are configured to receive incoming feeder cables 44 at an angle relative to central axis CA of housing 100. As shown, side cable entries 111, 113 have cable guide elements with longitudinal axes L1, L2; L3, L4, respectively, that are angled at an angle Θ relative to central axis CA. In some embodiments, angle Θ ranges from between about 45° to about 90° relative to central axis CA. In some embodiments, longitudinal axes L1, L2; L3, L4 are substantially perpendicular relative to central axis CA. In some embodiments, longitudinal axes L1, L2; L3, L4 are substantially coaxial with each other. In some embodiment, longitudinal axes L1, L2; L3, L4 are substantially parallel with each other. However, it is within the scope of the present disclosure that alternate configuration of longitudinal axes L1, L2; L3, L4 relative to each other may be used.

As also shown, side cable entries 111, 113 are spaced from side panels 103, 105, respectively, by distances D1, D2. Spacing side cable entries 111, 113 from side panels 103, 105 allows for greater efficiency in cable routing within the equipment rack 50. In particular, incoming cables 16 into side cable entries 111, 113 have a stiffness region that extends outwardly from side cable entries 111, 113 before extending downward from rack mountable housing 100. By spacing the side cable entries 111, 113 from side panels 103, 105, the stiffness regions of incoming cables 16 do not extend beyond side panels 103, 105, and as such, incoming cables 16 can be contained within the limits of equipment rack 50 (e.g., vertical frame members 50A-50D) thereby, enabling greater spatial efficiency within equipment rack 50. In some embodiments, D1 ranges from between about 50 mm to about 100 mm. In some embodiments, D1 is about 70 mm. In some embodiments, D2 ranges from between about 50 mm and about 100 mm. In some embodiments, D2 is about 70 mm. In some embodiments, D1 and D2 are substantially the same. In some embodiments, D1 and D2 are different.

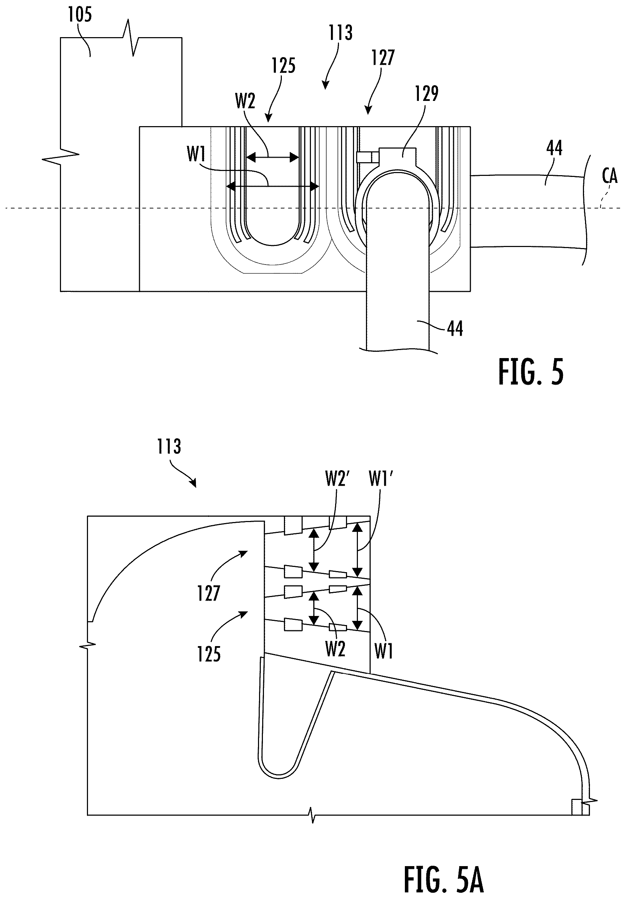

Referring briefly to FIGS. 5 and 5A, side cable entry 113 is shown in greater detail. As shown, side cable entry 113 comprises cable guide elements 125, 127 that are configured to receive incoming feeder cables 44. In particular, cable guide elements 125, 127 have a tapered profile such that incoming feeder cables 44 of varying diameters can be received into rack mountable housing 100. Stated another way, cable guide element 125 has a width W1 that is greater than width W2 that is closer to central axis CA (relative to width W1). Similarly, cable guide element 127 has a width W1' that is greater than width W2' that is closer to central axis CA (relative to width W1'). In some embodiments, width W1 ranges from between about 10 mm and about 15 mm. In some embodiments, width W1 is about 12.5 mm. In some embodiments, width W1' ranges from between about 15 mm and about 20 mm. In some embodiments, width W1' is about 16.5 mm. In some embodiments, width W2 ranges from between about 5 mm and about 10 mm. In some embodiments, width W2 is about 7.5 mm. In some embodiments, width W2' ranges from between about 10 mm and about 15 mm. In some embodiments, width W2' is about 10.5 mm. By varying the degree of taper between cable guide elements 125, 127 (i.e., varying the difference between W2 and W1 or W2' and W1'), cable guide elements 125, 127 can accommodate incoming feeder cables 44 of different diameters in one application of rack mountable housing 100. The tapered profile of cable guide elements 125, 127 also enables the use of a securing element 129 (e.g., a zip tie, etc.) to further secure an inserted feeder cable 44 into the side cable entry 113. While side cable entry 113 has been described above, the above description also applies to side cable entry 111, and for the sake of brevity, will not be discussed further herein.

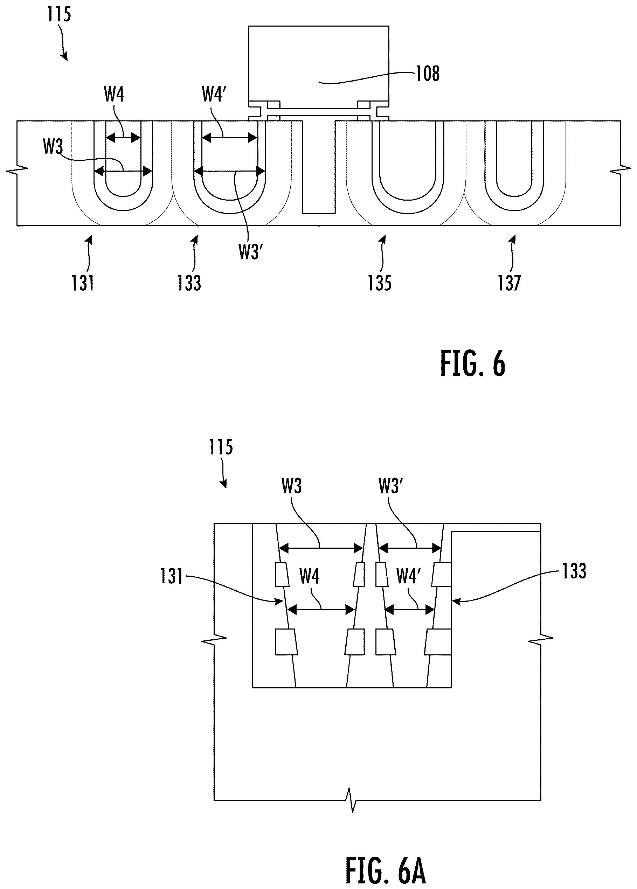

Referring back to FIGS. 3 and 4, rear cable entry 115 is configured to receive incoming feeder cables 44 where cable guide elements 131-137 (FIG. 6) of rear cable entry 115 have longitudinal axes L5-L8 that are substantially parallel with central axis CA.

Referring briefly to FIGS. 6 and 6A, rear cable entry 115 is shown in greater detail. As shown, rear cable entry 115 comprises cable guide elements 131-137 that are configured to receive incoming feeder cables 44. In particular, cable guide elements 131-137 have a tapered profile such that incoming feeder cables 44 of varying diameters can be received into rack mountable housing 100. Stated another way, cable guide element 131 has a width W3 that is greater than width W4 that is closer to divider wall 108 (relative to width W3). Similarly, cable guide element 133 has a width W3' that is greater than width W4' that is closer to divider wall 108 (relative to width W3'). In some embodiments, width W3 ranges from between about 10 mm and about 15 mm. In some embodiments, width W3 is about 12.5 mm. In some embodiments, width W3' ranges from between about 15 mm and about 20 mm. In some embodiments, width W3' is about 16.5 mm. In some embodiments, width W4 ranges from between about 5 mm and about 10 mm. In some embodiments, width W4 is about 7.5 mm. In some embodiments, width W4' ranges from between about 10 mm and about 15 mm. In some embodiments, width W4' is about 10.5 mm. By varying the degree of taper between cable guide elements 125, 127 (i.e., varying the difference between W4 and W3 or W4' and W3'), cable guide elements 131, 133 can accommodate optical cables 16 of different diameters in one application of rack mountable housing 100. The tapered profile of cable guide elements 131, 133 also enables the use of a securing element 129 (e.g., a zip tie, etc. as shown in FIG. 5) to further secure an inserted optical cable 16 into the rear cable entry 115. While cable guide elements 131, 133 of rear cable entry 115 have been described above, the above description also applies to cable guide elements 135, 137 of rear cable entry 115, and for the sake of brevity, will not be discussed further herein.

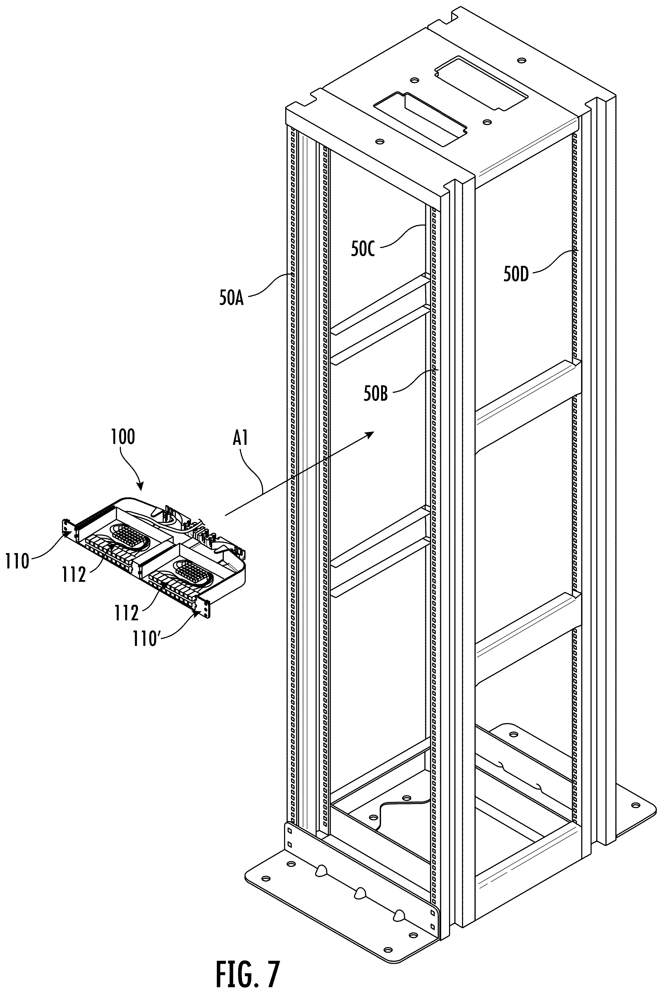

Referring now to FIGS. 7-9, a method of installing the rack mountable housing 100 onto an equipment rack 50 is shown. Referring first to FIG. 7, rack mountable housing 100 with an optical module 112 installed therein is advanced towards equipment rack 50 along direction A1. In particular, rack mountable housing 100 is advanced along direction A1 such that latching arrangements 110, 110' couple to front vertical frame members 50A, 50B as discussed in greater detail herein. Referring now to FIG. 8, rack mountable housing 100 continues to move along direction A1 where first latch 117' and second latch 119' of latching arrangement 110' are in alignment with apertures 51, 53 of front vertical frame member 50B and screw hole 121 of latching arrangement 100 is in alignment with screw hole 55 of front vertical frame member 50B. Rack mountable housing 100 continues to advance along direction A1 until first latch 117' and second latch 119' engage with front vertical frame member 50B as shown in FIG. 9. In particular, first latch 117' and second latch 119' engage with front vertical frame member 50B in a snap fit configuration by advancing through apertures 51, 53 such that protrusions 117A', 119A' of first latch 117' and second latch 119' engage with front vertical frame member 50B. In this configuration, screw hole 121' of latching arrangement 110' and screw hole 55 of front vertical frame member 50B are in alignment such that an optional securing element 135 (e.g., a screw) can be inserted through screw holes 121', 55 to provide further securement of rack mountable housing onto front vertical frame member 50B of equipment rack 50.

While the coupling of latching arrangement 110' with front vertical frame member 50B is described above, the above description also applies to coupling the latching arrangement 110 to front vertical frame member 50A, which is completed to couple the rack mountable housing 100 to equipment rack 50 resulting in the configuration shown in FIG. 2.

The above description also applies to the coupling of latching arrangements 110, 110' to rear vertical frame members 50C, 50D in alternate embodiments.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The disclosure in its broader aspects is therefore not limited to the specific details, representative apparatus and methods and illustrative examples shown and described. Accordingly, departures may be made from such details without departing from the scope of the disclosure.

## Claims

1. A fiber optic system for installation on an equipment rack in a fiber optic network comprising:
a housing having a central axis and comprising:
a bottom panel, a first side panel, a second side panel, and a rear panel to define a module compartment within the housing, the module compartment housing including an optical module within the housing;
the rear panel comprising a cable entry area, the cable entry area comprising:
a side cable entry that has a longitudinal axis at an angle relative to the central axis of the housing; and
an optical module received within the module compartment.

2. The fiber optic system of claim 1, wherein the angle of the longitudinal axis of the side cable entry relative to the central axis is about 90°.

3. The fiber optic system of claim 1 or claim 2, wherein the side cable entry comprises a cable guide element having a taper, whereby a first width of the cable guide element that is distal to the central axis is greater than a second width of the cable guide element that is proximal to the central axis.

4. The fiber optic system of any of claims 1-3, wherein an entry of the side cable entry is positioned between one of the first side panel or the second side panel and the central axis.

5. The fiber optic system of any of claims 1-4, wherein the cable entry area further comprises a rear cable entry comprising a cable guide pathway having a longitudinal axis that is substantially parallel to the central axis; and
wherein the cable guide pathway has a taper, whereby a first width of the cable guide pathway that is distal to the module compartment is greater than a second width of the cable guide pathway that is proximal to the module compartment.

6. The fiber optic system of any of claims 1-5, wherein the module compartment comprises a first module compartment section and a second module compartment section that are separated by a divider wall in the housing;
wherein the optical module is housed in one of the first module compartment section or the second module compartment section by engaging with the divider wall and one of the first side panel and the second side panel.

7. The fiber optic system of any of claims 1-6, wherein the optical module comprises a body, a front end. a rear end, and first and second side panels and a rear panel defining an interior,
wherein the optical module further includes a plurality of adapters positioned on the front end of the optical module.

8. A fiber optic system of any of claims 1-7 installed on an equipment rack in a fiber optic network, wherein the equipment rack having a front side and a back side with a first vertical frame member opposing a second vertical frame member between the front side and the back side; and
wherein the first side panel and the second side panel each comprise a latching arrangement extending from an end of the first side panel and the second side panel, the latching arrangement is configured to couple the housing to the equipment rack of a fiber optic network, the latching arrangement comprising a first latch and a second latch.

9. The fiber optic system of claim 8, wherein the first latch and the second latch are configured to engage in a snap fit configuration when installed onto the equipment rack.

10. The fiber optic system of claim 8 or claim 9, wherein the first latch and the second latch are coupled onto a first vertical frame member of the equipment rack.

11. The fiber optic system of any of claims 8-10, wherein the latching arrangement further includes a screw hole; and
a screw is installed through the screw hole to couple the latching arrangement to the first vertical frame member of the equipment rack.

12. The fiber optic system of claim 11, wherein the screw hole is vertically between the first latch and the second latch of the latching member.
